# EUROPEAN PATENT APPLICATION

(11) **EP 4 328 945 A1**
(43) Date of publication of application: **28.02.2024**
(21) Application number: 22791409.0
(22) Date of filing: 14.03.2022
(51) Int. Cl.: H01G 11/52, H01G 11/62, H01G 11/64, H01M 10/052, H01M 10/0567, H01M 10/0568, H01M 50/443, H01M 50/451

(54) **NON-AQUEOUS ELECTROLYTE AND SECONDARY BATTERY**

(30) Priority: 23.04.2021 JP 2021073394
(71) Applicant: Nippon Shokubai Co., Ltd., Osaka-shi, Osaka 541-0043 (JP)
(72) Inventor: ODANI, Toru, Suita-shi, Osaka 564-0034 (JP); NISHIHATA, Ryo, Suita-shi, Osaka 564-0034 (JP); MIZUNO, Hiroyuki, Suita-shi, Osaka 564-0034 (JP)
(74) Representative: Germain Maureau
(86) International application number: PCT/JP2022/011333
(87) International publication number: WO 2022/224629

(57) **Abstract**

A non-aqueous electrolyte solution, containing: compounds represented by the general formulae (1) to (3):
LiN(R¹SO₂)(R²SO₂) (where R¹ and R² are identical to or different from each other and each represent a fluorine atom, an alkyl group having 1 to 6 carbon atoms, or a fluoroalkyl group with 1 to 6 carbon atoms) (1)
LiPFₐ(CₘF₂ₘ₊₁)₆₋ₐ (where 0 ≤ a ≤ 6 and 1 ≤ m ≤ 4) (2)
(Li)ₘ(A)ₙ(UFₓ)_{y} (where A represents an oxygen atom, a sulfur atom, a phosphorus atom, or a nitrogen atom, U represents a boron atom or a phosphorus atom, 1 ≤ m ≤ 6, 1 ≤ n ≤ 6, x is 3 or 5, and 1 ≤ y ≤ 6) (3).

## Description

### TECHNICAL FIELD

The present disclosure relates to a non-aqueous electrolyte solution and a secondary battery.

### BACKGROUND ART

In order to improve battery performance of secondary batteries such as lithium ion secondary batteries, various non-aqueous electrolyte solutions used in secondary batteries have been studied. For example, Patent Document 1 proposes a non-aqueous electrolyte solution containing an electrolyte containing a lithium-containing complex compound.

### CITATION LIST

### PATENT DOCUMENT

Patent Document 1: International Publication No. 2019/180945

### SUMMARY OF THE INVENTION

### TECHNICAL PROBLEM

Based on the studies so far, the inventors of the present application have found that a non-aqueous electrolyte solution containing a sulfonylimide compound such as lithium bis(fluorosulfonyl)imide as an electrolyte improves performance of a lithium ion secondary battery such as high-temperature durability and charge-discharge cycle characteristics.

However, Patent Document 1 does not consider a non-aqueous electrolyte solution containing a sulfonylimide compound.

The present disclosure was made in view of the points described above, and an object thereof is to provide a non-aqueous electrolyte solution containing a sulfonylimide compound and capable of improving battery performance and a secondary battery including the non-aqueous electrolyte solution.

### SOLUTION TO THE PROBLEM

As a result of further studies, the inventors of the present application have found that a battery using a non-aqueous electrolyte solution containing a sulfonylimide compound causes greater self-discharge from a fully charged state than a battery using a non-aqueous electrolyte solution containing a lithium compound alone (e.g., LiPF₆ or LiBF₄) other than the sulfonylimide compound as an electrolyte, and that there is room for improvement in storage characteristics of the battery. This finding was first discovered by the inventors of the present invention, and Patent Document 1 or any other documents are silent about the self-discharge of the battery using the non-aqueous electrolyte solution containing the sulfonylimide compound (especially lithium bis(fluorosulfonyl)imide).

For the improvement of the storage characteristics and the battery performance, the present disclosure has been devised to reduce the self-discharge of the battery, which is a problem specific to the non-aqueous electrolyte solution containing the sulfonylimide compound, and to improve charge characteristics at low temperature. The present disclosure is specifically as follows.

The present disclosure is directed to a non-aqueous electrolyte solution containing: a compound represented by
the general formula (1):

   LiN(R¹SO₂)(R²SO₂) (1)

   (where R¹ and R² are identical to or different from each other and each represent a fluorine atom, an alkyl group with 1 to 6 carbon atoms, or a fluoroalkyl group with 1 to 6 carbon atoms); a compound represented by
the general formula (2):

   LiPFₐ(CₘF₂ₘ₊₁)₆₋ₐ (2)

   (where 0 ≤ a ≤ 6 and 1 ≤ m ≤ 4); and
   a compound represented by
the general formula (3):

   (Li)ₘ(A)ₙ(UFₓ)_{y} (3)

   (where A represents an oxygen atom, a sulfur atom, a phosphorus atom, or a nitrogen atom, U represents a boron atom or a phosphorus atom, 1 ≤ m ≤ 6, 1 ≤ n ≤ 6, x is 3 or 5, and 1 ≤ y ≤ 6).

In the non-aqueous electrolyte solution, the compound represented by the general formula (3) may contain at least one of (LiBF₃)₂O or LiBF₃OLi. The content of the compound represented by the general formula (3) may be from 0.01% by mass to 20% by mass inclusive. The compound represented by the general formula (1) may contain LiN(FSO₂)₂. The mole ratio of the concentration of the compound represented by the general formula (1) to the concentration of the compound represented by the general formula (2) may be from 1:25 to 5:1 inclusive, from 1:120 to 1:25 inclusive, from 5:1 to 12:1 inclusive, or from 1:120 to 12:1 inclusive. The non-aqueous electrolyte solution may further contain a fluorine-containing carbonate compound.

The present disclosure is further directed to a secondary battery using the non-aqueous electrolyte solution. The secondary battery may include a separator having at least one surface coated with inorganic particles.

### ADVANTAGES OF THE INVENTION

The present disclosure can provide a non-aqueous electrolyte solution containing a sulfonylimide compound and capable of improving battery performance, and a secondary battery including the non-aqueous electrolyte solution.

### DESCRIPTION OF EMBODIMENTS

Embodiments will be described in detail below with reference to the drawings. The following description of preferred embodiments is merely an example in nature and is not intended to limit the scope, applications, or use of the present disclosure.

### <Non-Aqueous Electrolyte Solution>

A non-aqueous electrolyte solution of the present embodiment contains compounds represented by the general formulae (1) to (3). Specifically, the non-aqueous electrolyte solution contains the compounds represented by the general formulae (1) to (3) as essential components.

### (Compound Represented by General Formula (1))

The compound represented by the general formula (1) is a sulfonylimide compound represented by the general formula (1):
[Chemical 1]

LiN(R¹SO₂)(R²SO₂) (1)

(a fluorine-containing sulfonylimide salt, this compound will be hereinafter referred to as a "sulfonylimide compound (1)").

In the general formula (1), R¹ and R² are identical to or different from each other and each (independently) represent a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include one obtained by substituting some or all of hydrogen atoms contained in an alkyl group with 1 to 6 carbon atoms with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituents R¹ and R², a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are still more preferable, and the fluorine atom is even more preferable. The substituents R¹ and R² may be identical to or different from each other.

Examples of the sulfonylimide compound (1) include lithium bis(fluorosulfonyl)imide (LiN(FSO₂)₂, also referred to as "LiFSI"), lithium bis(trifluoromethylsulfonyl)imide (LiN(CF₃SO₂)₂, may be hereinafter referred to as "LiTFSI"), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, lithium (fluorosulfonyl)(heptafluoropropylsulfonyl)imide, lithium bis(pentafluoroethylsulfonyl)imide, and lithium bis(heptafluoropropylsulfonyl)imide. The sulfonylimide compounds (1) may be used alone or in combination of two or more of them. As the sulfonylimide compound (1), a commercially available product may be used, or one synthesized by any known method may also be used.

Among the examples of the sulfonylimide compound (1), LiN(FSOz)z and LiN(CF₃SO₂)₂ are preferable, and LiN(FSO₂)₂ is more preferable, in view of improving charge characteristics at low temperature. In other words, in the non-aqueous electrolyte solution, the sulfonylimide compound (1) preferably contains at least one of LiN(FSO₂)₂ or LiN(CF₃SO₂)₂, more preferably contains LiN(FSO₂)₂. The sulfonylimide compound (1) may be present (contained) in the ionic form in the non-aqueous electrolyte solution.

### (Compound Represented by General Formula (2))

The compound represented by the general formula (2) is a fluorophosphoric acid compound represented by the general formula (2):
[Chemical 2]

LiPFₐ(CₘF₂ₘ₊₁)₆₋ₐ (2)

(this compound will be hereinafter referred to as a "fluorophosphoric acid compound (2)").

In the general formula (2), 0 ≤ a ≤ 6 and 1 ≤ m ≤ 4.

Examples of the fluorophosphoric acid compound (2) include LiPF₆, LiPF₃(CF₃)₃, LiPF₃(C₂F₅)₃, LiPF₃(C₃F₇)₃, and LiPF₃(C₄F₉)₃. These fluorophosphoric acid compounds (2) may be used alone, or two or more of them may be used in combination. As the fluorophosphoric acid compound (2), a commercially available product may be used, or one synthesized by any known method may also be used.

Among the examples of the fluorophosphoric acid compound (2), LiPF₆ and LiPF₃(C₂F₅)₃ are preferable, and LiPF₆ is more preferable. The fluorophosphoric acid compound (2) may be present (contained) in the ionic form in the non-aqueous electrolyte solution.

### (Compound Represented by General Formula (3))

The compound represented by the general formula (3) is a compound represented by the general formula (3):
[Chemical 3]

(Li)ₘ(A)ₙ(UFₓ)_{y} (3)

(this compound will be hereinafter referred to as a "complex compound (3)").

In the general formula (3), A represents an oxygen atom (O), a sulfur atom (S), a phosphorus atom (P), or a nitrogen atom (N). Among the examples of A, the oxygen atom and the sulfur atom are preferable, and the oxygen atom is more preferable, in view of stability of the lithium salt and solubility in solvents.

In the general formula (3), U represents a boron atom (B) or a phosphorus atom (P). Among the examples of U, the boron atom is preferable in view of bonding with A (particularly the oxygen atom, the sulfur atom, or the nitrogen atom).

In the general formula (3), 1 ≤ m ≤ 6, 1 ≤ n ≤ 6, x is 3 or 5, 1 ≤ y ≤ 6, and m and n are the same as or different (independent of each other), preferably 1 ≤ m ≤ 3, more preferably 1 and 2. x is preferably 3 in view of the solubility of the electrolyte in the solvent. y is preferably 1 ≤ y ≤ 3 in view of bonding with A.

Examples of the complex compound (3) include: O-(BF₃Li)(Li) [where O-(BF₃Li)(Li) is a complex having a structure of Li-O(-BF₃⁻Li⁺), the compounds exemplified below are also complexes having the same structure as described above and will be referred to as "LiBF₃OLi"]; O-(BF₃Li)₂ [hereinafter referred to as "(LiBF₃)₂O"]; S-(BF₃Li)(Li), S-(BF₃Li)₂, N-(BF₃Li)₂(Li), N-(BF₃Li)₃, P-(BF₃Li)₂(Li), P-(BF₃Li)₃, O-(PFsLi)(Li), O-(PF₅Li)₂, S-(PF₅Li)(Li), S-(PF₅Li)₂, and N-(PF₅Li)₃. The complex compounds (3) may be used alone, or in combination of two or more of them. As the complex compound (3), a commercially available product may be used, or one synthesized by any known method may also be used.

Among the complex compounds (3), LiBF₃OLi, (LiBF₃)₂O, S-(BF₃Li)(Li), S-(BF₃Li)₂, N-(BF₃Li)₃, P-(BF₃Li)₃, O-(PFsLi)(Li), O-(PF₅Li)₂, S-(PF₅Li)(Li), S-(PF₅Li)₂, and N-(PF₅Li)₃ are preferable, and LiBF₃OLi and (LiBF₃)₂O are more preferable, in view of stability of the complex compound (3) and solubility in solvents. In other words, the complex compound (3) in the non-aqueous electrolyte solution preferably contains at least one of LiBF₃OLi or (LiBF₃)₂O.

The concentration of the sulfonylimide compound (1) in the non-aqueous electrolyte solution is preferably 0.01 mol/L or more, more preferably 0.05 mol/L or more, yet more preferably 0.1 mol/L or more, still more preferably 0.3 mol/L or more, even more preferably 0.5 mol/L or more, in view of improving the charge characteristics at low temperature. The concentration is preferably 5 mol/L or less, more preferably 3 mol/L or less, yet more preferably 2 mol/L or less, still more preferably 1.5 mol/L or less, even more preferably 1 mol/L or less, in view of reducing degradation of the battery performance caused by an increase in viscosity of the electrolyte solution and improving the charge characteristics at low temperature.

The concentration of the fluorophosphoric acid compound (2) in the non-aqueous electrolyte solution is preferably 0.1 mol/L or more, more preferably 0.2 mol/L or more, yet more preferably 0.3 mol/L or more, still more preferably 0.5 mol/L or more, in view of improving the charge characteristics at low temperature. The concentration is preferably 1.5 mol/L or less, more preferably 1 mol/L or less, yet more preferably 0.8 mol/L or less, in view of improving the charge characteristics at low temperature.

The total concentration of the sulfonylimide compound (1) and the fluorophosphoric acid compound (2) is preferably 0.8 mol/L or more, more preferably 1 mol/L or more, yet more preferably 1.1 mol/L or more, still more preferably 1.2 mol/L or more, in view of improving the charge characteristics at low temperature. The concentration is preferably 5 mol/L or less, more preferably 3 mol/L or less, yet more preferably 2.5 mol/L or less, still more preferably 2.3 mol/L or less, even more preferably 2 mol/L or less, particularly preferably 1.5 mol/L or less, in view of reducing degradation of the battery performance caused by an increase in viscosity of the electrolyte solution and improving the charge characteristics at low temperature.

In view of improving the charge characteristics at low temperature, it is preferable to increase the concentration of the sulfonylimide compound (1). The ratio of the sulfonylimide compound (1) to the fluorophosphoric acid compound (2) (a mole ratio of the concentration of the sulfonylimide compound (1) to the concentration of the fluorophosphoric acid compound (2)) is preferably 1:25 or more, more preferably 1:10 or more, yet more preferably 1:8 or more, still more preferably 1:5 or more, even more preferably 1:2 or more, particularly preferably 1:1 or more. The upper limit is preferably 5:1 or less, more preferably 4:1 or less, yet more preferably 3:1 or less, still more preferably 2:1 or less.

It should be noted that the mole ratio is not limited to the above-described range, and the charge characteristics at low temperature can be improved even in a range wider than the above-described range. Specifically, the ratio of the sulfonylimide compound (1) to the fluorophosphoric acid compound (2) (the mole ratio of the concentration of the sulfonylimide compound (1) to the concentration of the fluorophosphoric acid compound (2)) may be 1:120 or more, 1:100 or more, or 1:50 or more, and 12:1 or less, 10:1 or less, or 8:1 or less. For example, the mole ratio may be from 1:120 to 1:25 inclusive (less than 1:25), from 5:1 (higher than 5:1) to 12:1 inclusive, or from 1:120 to 12:1 inclusive in the broadest range.

The content (addition amount) of the complex compound (3) in the non-aqueous electrolyte solution is preferably 0.01% by mass or more, more preferably 0.05% by mass or more, yet more preferably 0.1% by mass or more, still more preferably 0.5% by mass or more in 100% by mass of the non-aqueous electrolyte solution, in view of improving the charge characteristics at low temperature and reducing the self-discharge. The upper limit is preferably 20% by mass or less, more preferably 10% by mass or less, yet more preferably 5% by mass or less, still more preferably 3% by mass or less, even more preferably 2% by mass or less.

As described above, the non-aqueous electrolyte solution of the present embodiment contains the compounds (1) to (3). The combination of the three specific components improves the charge characteristics at low temperature and reduces the self-discharge, particularly the self-discharge after storage at high temperature, which is a problem specific to the non-aqueous electrolyte solution containing the sulfonylimide compound (1). When a non-aqueous electrolyte solution that contains only two of the sulfonylimide compound (1) and the complex compound (3) and contains no fluorophosphoric acid compound (2) is used, a battery cannot be normally charged and cannot operate as a battery. This finding has also been found by the present inventors. Specifically, in the non-aqueous electrolyte solution of the present embodiment, use of the compounds (1) to (3) in combination can solve the above-described problems collectively and can synergistically improve the charge characteristics and the storage characteristics.

### (Other Components)

The non-aqueous electrolyte solution of the present embodiment may contain, in addition to the compounds (1) to (3), an imide salt or a non-imide salt which is generally used as an electrolyte, and an additive for improving various characteristics of a lithium ion secondary battery.

Examples of the imide salt include another fluorine-containing sulfonylimide salt (hereinafter referred to as "other sulfonylimide compound") that is different from the sulfonylimide compound (1). Examples of the other sulfonylimide compound include a non-lithium salt of fluorine-containing sulfonylimide listed above as the sulfonylimide compound (1) (e.g., a salt obtained by substituting lithium (ion) in the sulfonylimide compound (1) with cations other than the lithium ions). Examples of the salt substituted with cations other than the lithium ions include: an alkali metal salt such as a sodium salt, a potassium salt, a rubidium salt, and a cesium salt; an alkaline earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more of them. As the other sulfonylimide compound, a commercially available product may be used, or one synthesized by any known method may also be used. The other sulfonylimide compound may be present (contained) in the ionic form in the non-aqueous electrolyte solution.

Examples of the non-imide salt include a salt of a non-imide-based anion and a cation (lithium ions and the cations shown above as examples). Examples of the non-imide salt include: lithium salts such as LiBF₄, LiBF(CF₃)₃, LiBF(C₂F₅)₃, LiBF(C₃F₇)₃, lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂]; and non-lithium salts such as salts obtained by substituting lithium (ions) in these lithium salts with the above-listed cations (e.g., NaBF₄, NaPF₆, and NaPF₃(CF₃)₃). These non-imide salts may be used alone or in combination of two or more of them As the non-imide salt, a commercially available product may be used, or one synthesized by any known method may also be used. The non-imide salt may be present (contained) in the ionic form in the non-aqueous electrolyte solution.

Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as phenylethylene carbonate and erythritan carbonate; fluorine-containing carbonate compounds such as fluoroethylene carbonate (FEC), 4,5-difluoroetylene carbonate, trifluoropropylene carbonate, bis(trifluoromethyl)carbonate, and ethyl(trifluoromethyl)carbonate; sulfamic acid (amidosulfuric acid, H₃NSO₃); sulfamate salts (alkali metal salts such as lithium salts, sodium salts, and potassium salts; alkaline earth metal salts such as calcium salts, strontium salts, and barium salts; other metal salts such as manganese salts, copper salts, zinc salts, iron salts, cobalt salts, and nickel salts; ammonium salts; and guanidine salts); fluorophosphoric acid compounds such as lithium monofluorophosphate (Li₂PO₃F) and lithium difluorophosphate (LiPO₂F₂); fluorosulfonic acid compounds such as lithium fluorosulfonate (LiFSO₃), sodium fluorosulfonate (NaFSO₃), potassium fluorosulfonate (KFSO₃), and magnesium fluorosulfonate (Mg(FSO₃)₂); lithium salts having an oxalate skeleton such as lithium bis(oxalato)borate (LiBOB), lithium difluoro(oxalato)borate (LiDFOB), lithium difluoro(oxalato) phosphate (LIDFOP), lithium tetrafluoro(oxalato)phosphate (LITFOP), lithium difluorobis(oxalato)phosphate (LiDFBOP), and lithium tris(oxalato)phosphate. These additives may be used alone, or in combination of two or more of them. Among these additives, the fluorine-containing carbonate compounds are preferable, and fluoroethylene carbonate (FEC) is more preferable, in view of more improved synergistic effect of the combination of the compounds (1) to (3).

The content (addition amount) of the additive in the non-aqueous electrolyte solution is preferably from 0.1% by mass to 25% by mass inclusive, more preferably from 0.5% by mass to 15% by mass inclusive, yet more preferably from 3% by mass to 15% by mass inclusive, still more preferably from 5% by mass to 10% by mass inclusive in 100% by mass of the non-aqueous electrolyte solution. When the amount of the other additive used is too small, it may be difficult for the other additive to exhibit its effect. On the other hand, when the amount of the other additive used is large, it is also difficult for the other additive to exhibit its effect corresponding to the amount added, and the non-aqueous electrolyte solution may become more viscous, lowering the electrical conductivity.

### (Electrolyte Solution Solvent)

The non-aqueous electrolyte solution may contain an electrolyte solution solvent. The electrolyte solution solvent is not limited to a particular solvent as long as it can dissolve and disperse the above-described compounds (1) to (3) and other components. Examples of the electrolyte solution solvent include a non-aqueous solvent and a medium such as a polymer or a polymer gel used in place of the solvent for the electrolyte solution, and any solvent generally used in a battery can be used.

Suitable examples of the non-aqueous solvents include a solvent that has a large dielectric constant and a boiling point of 60°C or higher, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate, ethyl methyl carbonate, diethyl carbonate, diphenyl carbonate, and methyl phenyl carbonate; saturated cyclic carbonate solvents such as ethylene carbonate, propylene carbonate, 2,3-dimethyl ethylene carbonate, 1,2-butylene carbonate, and erythritan carbonate; cyclic carbonate solvents having a saturated bond such as vinylene carbonate, methyl vinylene carbonate, ethyl vinylene carbonate, 2-vinyl ethylene carbonate, and phenylethylene carbonate; aliphatic carboxylic acid ester solvents such as methyl acetate, ethyl acetate, propyl acetate, isopropyl acetate, methyl propionate, ethyl propionate, propyl propionate, butyl acetate, and isopropyl propionate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; and 3-methyl-2-oxazolidinone. These solvents may be used alone, or in combination of two or more of them.

Among the electrolyte solution solvents, the carbonate solvents such as the chain carbonate ester solvent and the cyclic carbonate ester solvent, the lactone solvents, and the ether solvents are preferable, dimethyl carbonate, ethyl methyl carbonate, diethyl carbonate, ethylene carbonate, propylene carbonate, γ-butyrolactone, and γ-valerolactone are more preferable, and the carbonate solvents such as dimethyl carbonate, ethylmethyl carbonate, diethyl carbonate, ethylene carbonate, and propylene carbonate are yet more preferable.

The polymer or the polymer gel can be used instead of the electrolyte solution solvent by the following method. Examples of the method include: a method of dropping a solution prepared by dissolving an electrolyte salt in a solvent onto a polymer film formed by a known method to impregnate the polymer film with the electrolyte salt and the non-aqueous solvent so that the polymer film supports the electrolyte salt and the non-aqueous solvent; a method of melting and mixing a polymer and an electrolyte salt at a temperature higher than the melting point of the polymer, forming the mixture into a film, and impregnating the film with a solvent (gel electrolytes are formed by these methods); a method of mixing a non-aqueous electrolyte solution prepared by dissolving an electrolyte salt in an organic solvent in advance with a polymer, forming the mixture into a film by casting or coating, and volatilizing the organic solvent; and a method of molding a mixture obtained by melting and mixing a polymer and an electrolyte salt at a temperature higher than the melting point of the polymer (intrinsic polymer electrolytes are formed by these methods).

Examples of the polymer used as a substitute for the electrolyte solution solvent include polyethylene oxide (PEO) that is a homopolymer or copolymer of an epoxy compound (such as ethylene oxide, propylene oxide, butylene oxide, and allyl glycidyl ether), polyether polymers such as polypropylene oxide, methacrylic polymers such as polymethylmethacrylate (PMMA), nitrile polymers such as polyacrylonitrile (PAN), fluorine polymers such as polyvinylidene fluoride (PVdF), polyvinylidene fluoride-hexafluoropropylene, and copolymers thereof. These polymers may be used alone or in combination of two or more of them.

The non-aqueous electrolyte solution described above is used, for example, for a battery (a battery having a charge-discharge mechanism) and a power storage (electrochemical) device (or an ion conductive material constituting such a device). Specifically, the electrolyte solution can be used as an electrolyte solution of, for example, a primary battery, a secondary battery (e.g., a lithium (ion) secondary battery), a fuel battery, an electrolytic capacitor, an electric double layer capacitor, a solar battery, and an electrochromic display device. A battery (especially a secondary battery) will be described below as an example.

### <Secondary Battery>

A secondary battery of the present embodiment includes a positive electrode, a negative electrode, and a non-aqueous electrolyte solution. In this secondary battery, the non-aqueous electrolyte solution of the present embodiment, i.e., the non-aqueous electrolyte solution containing the compounds (1) to (3) as essential components, is used as the non-aqueous electrolyte solution.

### (Positive Electrode)

The positive electrode includes a positive electrode current collector and a positive electrode mixture layer formed on the positive electrode current collector, and is usually in a sheet shape.

Examples of metal used for the positive electrode current collector include iron, copper, aluminum, nickel, stainless steel, titanium, tantalum, gold, and platinum. Among them, aluminum is preferable. The shape and size of the positive electrode current collector are not limited to particular ones.

The positive electrode mixture layer is made of a positive electrode mixture (a positive electrode composition). The positive electrode mixture contains components such as a positive electrode active material, a conductivity aid, a binder, and a solvent dispersing these components.

In the secondary battery of the present embodiment, the positive electrode (positive electrode mixture) used is suitably a ternary positive electrode active material such as LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, and LiNi_{0.8}Co_{0.1}Mn_{0.1}O₂ or an iron phosphate positive electrode active material having an olivine structure such as LiFePO₄ and LiFe_{0.995}Mn_{0.005}PO₄. These positive electrode active materials may be used alone or in combination of two or more of them.

The positive electrode preferably contains at least one of the ternary positive electrode active material or the iron phosphate positive electrode active material, but may further contain other positive electrode active material. The other positive electrode active material may be any material that can absorb and desorb various ions (such as lithium ions and sodium ions). For example, a positive electrode active material used in a known secondary battery (a lithium ion secondary battery or a sodium ion secondary battery) can be used.

Examples of the positive electrode active material used for the lithium ion secondary battery include: lithium cobalt oxide; lithium nickel oxide; lithium manganese oxide; transition metal oxides such as ternary oxides represented by LiNi_{1-v-w}CoₓAl_{y}O₂ (0 ≤ v ≤ 1, 0 ≤ w ≤ 1) other than the above-described ternary positive electrode active materials; compounds having an olivine structure such as LiAPO₄ (A represents Mn, Ni, or Co); solid solution materials incorporating two or more transition metals (such as a solid solution of electrochemically inactive layered Li₂MnO₃ and electrochemically active layered LiMO₂ (M represents a transition metal such as Co and Ni); LiCoₓMn₁₋ₓO₂ (0 ≤ x ≤ 1); LiNiₓMn₁₋ₓO₂ (0 ≤ x ≤ 1); compounds having a fluorinated olivine structure such as Li₂APO₄F (A represents Fe, Mn, Ni, or Co); and sulfur. These may be used alone or in combination of two or more of them.

Examples of the positive electrode active material used for the sodium ion secondary battery include NaNiOz, NaCoO₂, NaMnOz, NaVOz, NaFeOz, Na(NixMn₁₋ₓ)O₂ (0 < X < 1), Na(FexMn₁₋ₓ)O₂ (0 < X < 1), NaVPO₄F, Na₂FePO₄F, and Na₃V₂(PO₄)₃. These may be used alone or in combination of two or more of them.

Among the other positive electrode active materials, in particular, a positive electrode active material capable of absorbing and desorbing lithium ions may be suitably used. Such a positive electrode active material is used, for example, in a lithium ion secondary battery using a non-aqueous electrolyte solution. Such a non-aqueous system usually has a lower ion conductivity than an aqueous system. However, the present disclosure can efficiently improve the discharge capacity of the non-aqueous system.

The content of the positive electrode active material (the total content if two or more positive electrode active materials are contained) is preferably 75 mass% or more, more preferably 85 mass% or more, yet more preferably 90 mass% or more, and preferably 99 mass% or less, more preferably 98 mass% or less, yet more preferably 95 mass% or less, with respect to 100 mass% of the total amount of the components contained in the positive electrode mixture in view of improving the output characteristics and electrical characteristics of the secondary battery.

The conductivity aid is used to improve the output of the lithium ion secondary battery. Conductive carbon is mainly used as the conductivity aid. Examples of the conductive carbon include carbon black, fiber-like carbon, and graphite. These conductivity aids may be used alone or in combination of two or more of them. Among the conductivity aids, carbon black is preferable. Examples of the carbon black include Ketjen black and acetylene black. In the nonvolatile content of the positive electrode mixture, the conductivity aid is preferably contained in an amount of 1 mass% to 20 mass%, more preferably 1.5 mass% to 10 mass%, in view of improving the output characteristics and electrical characteristics of the lithium ion secondary battery.

Examples of the binder include: fluorine-based resins such as polyvinylidene fluoride and polytetrafluoroethylene; synthetic rubbers such as styrene-butadiene rubber and nitrilebutadiene rubber; polyamide resins such as polyamideimide; polyolefin resins such as polyethylene and polypropylene; poly(meth)acrylic resins; polyacrylic acids; and cellulose-based resins such as carboxymethyl cellulose. The binders may be used alone or in combination of two or more of them. These binders may be dissolved or dispersed in a solvent in use.

Examples of the solvent include N-methyl-2-pyrrolidone (NMP), dimethylformamide, dimethylacetamide, methyl ethyl ketone, tetrahydrofuran, acetonitrile, acetone, ethanol, ethyl acetate, and water. These solvents may be used alone or in combination of two or more of them. The amount of the solvent used is not limited to a particular value, and may be determined as appropriate in accordance with the manufacturing method and the material used.

If necessary, the positive electrode mixture may also contain other component, for example: polymers including non-fluorine polymers such as a (meth)acrylic polymer, a nitrile polymer, and a diene polymer, and fluorine polymers such as polytetrafluoroethylene; emulsifiers such as an anionic emulsifier, a nonionic emulsifier, and a cationic emulsifier; dispersing agents including polymer dispersing agents such as a styrene-maleic acid copolymer and polyvinylpyrrolidone; thickeners such as carboxymethyl cellulose, hydroxyethyl cellulose, polyvinyl alcohol, polyacrylic acid (salt), and an alkali-soluble (meth)acrylic acid-(meth)acrylic acid ester copolymer; and a preservative. In the nonvolatile content of the positive electrode mixture, the other component is contained in an amount of preferably 0 mass% to 15 mass%, more preferably 0 mass% to 10 mass%.

The positive electrode mixture can be prepared, for example, by mixing the positive electrode active material, the conductivity aid, the binder, the solvent, and the optional other component, and dispersing the mixture using a beads mill, a ball mill, or an agitating mixer.

The positive electrode may be formed (coated) by any method. Examples of the method include: (1) a method of applying the positive electrode mixture to the positive electrode current collector (followed by drying) by a common coating method (e.g., a doctor blade method); (2) a method of immersing the positive electrode current collector in the positive electrode mixture (followed by drying); (3) a method of joining a sheet made of the positive electrode mixture to the positive electrode current collector (e.g., with a conductive adhesive) and pressing (and drying) the sheet; (4) a method of applying or casting the positive electrode mixture to which a liquid lubricant has been added onto the positive electrode current collector, forming the positive electrode mixture into a desired shape, and then removing the liquid lubricant (followed by extending the product uniaxially or multiaxially); and (5) a method of making the positive electrode mixture (or a solid content forming the positive electrode mixture layer) into slurry with an electrolyte solution, transferring the slurry in a semi-solid state to a current collector (the positive electrode current collector), and using the positive electrode mixture as an electrode (the positive electrode) without drying.

The positive electrode mixture layer thus formed or coated (applied) may be dried or pressed, if necessary.

### (Negative Electrode)

The negative electrode includes a negative electrode current collector and a negative electrode mixture layer formed on the negative electrode current collector and is usually formed into a sheet shape.

Examples of metal used for the negative electrode current collector include iron, copper, aluminum, nickel, stainless steel (SUS), titanium, tantalum, gold, and platinum. Among them, copper is preferable. The shape and size of the negative electrode current collector are not limited to particular ones.

The negative electrode mixture layer is made of a negative electrode mixture (a negative electrode composition). The negative electrode mixture contains components such as a negative electrode active material, a conductivity aid, a binder, and a solvent dispersing these components.

The negative electrode active material may be any known negative electrode active material used for various batteries (e.g., a lithium secondary battery) as long as the material can absorb and desorb ions (e.g., lithium ions). Specific examples of the negative electrode active material include graphite materials such as artificial graphite and natural graphite, a mesophase calcined body made from coal or petroleum pitches, carbon materials such as non-graphitizable carbon, a Si-based negative electrode material such as Si, a Si alloy, and SiO (silicon oxide), a Sn-based negative electrode material such as a Sn alloy, and lithium alloys such as a lithium metal and a lithium-aluminum alloy. These negative electrode active materials may be used alone or in combination of two or more of them. For example, a composite material of silicon oxide and graphite can also be used.

The negative electrode mixture may further include other components such as a conductivity aid (conductive material), a binder, and a solvent. As the conductivity aid, the binder, and the solvent, the same components as those described above can be used. These components are used in the same proportion as described above.

The negative electrode may be produced in the same manner as the positive electrode.

### (Separator)

The secondary battery may include a separator. The separator is disposed to separate the positive electrode and the negative electrode from each other. The separator is not limited to a particular one, and any known separator can be used in the present disclosure. Specific examples of the separator include a porous sheet (e.g., a polyolefin-based microporous separator and a cellulose-based separator) formed of a polymer capable of absorbing and retaining an electrolyte solution (non-aqueous electrolyte solution), a nonwoven fabric separator, and a porous metal body.

Examples of the material of the porous sheet include polyethylene, polypropylene, and a laminate having a three layer structure of polypropylene, polyethylene, and polypropylene.

Examples of the material of the nonwoven fabric separator include cotton, rayon, acetate, nylon, polyester, polypropylene, polyethylene, polyimide, aramid, and glass. These materials may be used alone, or in combination of two or more of them, depending on the required mechanical strength.

A separator having at least one surface (one of surfaces) coated with inorganic particles may be suitably used. In other words, a separator having an insulating layer containing inorganic particles on at least one surface is preferably used. Use of the separator having the insulating layer further improves the synergistic effect of the combination of the compounds (1) to (3). When the insulating layer is formed on one of the surfaces of the separator, the surface having the insulating layer may be opposed to the positive electrode or the negative electrode. Among the separators having the insulating layer on at least one of the surfaces, a separator having insulating layers on both surfaces is preferable.

The insulating layer is made of an insulating composite material. The insulating composite material contains inorganic particles, a binder, a solvent for dispersing these components.

Examples of the inorganic particles include particles of alumina, silica, magnesia, titania, zirconia, LiNbO₃, LfPON(Li_{3+y}PO₄₋ₓNₓ), a group called LISICON (Lithium-Super-Ion-CONductor), Thio-LISICON (e.g., Li_{3.25}Ge_{0.25}P_{0.75}S₄), Li₂S alone, and ceramic particles such as Li₂S-P₂S₅, Li₂S-SiS₂, Li₂S-GeS₂, Li₂S-B₂S₅, Li₂S-Al₂S₅, and Li₂O-Al₂O₃-TiO₂-P₂O₅ (LATP).

As the binder, the components described as the examples of the binder can be used. For example, polymer compounds such as polyvinylidene fluoride (PVdF) can be used. As the solvent, a solvent used in the positive electrode or the negative electrode can be used. For example, N-methyl-2-pyrrolidone (NMP) can be used.

The insulating layer can be formed (coated) by the same method as the method for forming (coating) the positive electrode described above. In this case, the positive electrode mixture may be replaced with an insulating composite material, the positive electrode current collector may be replaced with a separator, and an insulating layer may be formed on one or both surfaces of the separator.

### (Battery Housing)

A battery element including the positive electrode, the negative electrode, and the non-aqueous electrolyte solution (and the separator) is usually contained in a battery housing to protect the battery element from external shocks and environmental degradation when the battery is in use. The battery housing is made of any material, and any known battery housing can be used.

If necessary, an expanded metal, a fuse, an overcurrent protection element such as a PTC element, or a lead plate may be placed in the battery housing to avoid an increase in internal pressure of the battery and excessive charge/discharge.

The battery (such as the lithium ion secondary battery) is not limited to have a particular shape, and may have any known shape such as a cylindrical shape, a rectangular shape, a laminate shape, a coin shape, and a large shape. In use as a high-voltage (e.g., tens to hundreds of volts) power supply to be mounted in an electric vehicle or a hybrid electric vehicle, for example, individual batteries may be connected in series into a battery module.

The rated charging voltage of the secondary battery (such as the lithium ion secondary battery) is not limited to a particular value, and may be 3.6 V or more, preferably 4.0 V or more, more preferably 4.1 V or more, yet more preferably 4.2 V or more, when the secondary battery includes a positive electrode mainly containing the ternary positive electrode active material. Although the energy density increases as the rated charging voltage increases, the rated charging voltage may be 4.6 V or less (e.g., 4.5 V or less) in view of safety.

### <Method of Manufacturing Secondary Battery>

The secondary battery of the present embodiment can be easily manufactured, for example, by joining a positive electrode and a negative electrode (with a separator interposed therebetween, if necessary), placing the obtained laminate in a battery housing, injecting a non-aqueous electrolyte solution into the battery housing, and sealing the battery housing.

### <Effects>

The non-aqueous electrolyte solution and secondary battery of the present embodiment can achieve the following effects.

The non-aqueous electrolyte solution of the present embodiment contains three specific components, i.e., a sulfonylimide compound (1), a fluorophosphoric acid compound (2), and a complex compound (3). A battery using the non-aqueous electrolyte solution can be improved in charge characteristics at low temperature and can reduce self-discharge, particularly self-discharge after high-temperature storage, which is a problem specific to the non-aqueous electrolyte solution containing the sulfonylimide compound (1).

The non-aqueous electrolyte solution of the present embodiment can further improve the above-described effects by using four specific components further including a fluorine-containing carbonate compound.

A battery including the non-aqueous electrolyte solution of the present embodiment and a separator having an insulating layer containing inorganic particles on at least one of the surfaces can further improve the above-described effects.

### Examples

The present disclosure will be described below by way of Examples. The present disclosure is not limited to the following Examples. The following Examples can be modified and changed based on the spirit of the present disclosure, and are not excluded from the scope of the present disclosure.

### <Series of Example 1>

### (Production Example 1)

In an argon atmosphere, 10 mL of diethyl ether and 0.75 g of lithium oxide were added to a 100 mL Erlenmeyer flask to prepare a mixed solution, which was then cooled to 0°C with stirring. To the mixed solution, 10.5 g of boron trifluoride diethyl ether complex was added over 30 minutes with stirring to prepare a reactant solution, which was then kept at 25°C and stirred for 16 hours. Subsequently, the reactant solution was filtered to obtain a crude lithium oxide/2BF₃ complex. The obtained crude lithium oxide/2BF₃ complex was washed three times with 10 mL of dibutyl ether to remove an excess of the boron trifluoride diethyl ether complex. The obtained solid was dried under reduced pressure in an atmosphere of 110°C for 10 hours to obtain 4.04 g of "(LiBF₃)₂O" which is a complex of lithium oxide and 2BF₃.

### (Production Example 2)

In the same manner as Production Example 1, 2.24 g of "LiBF₃OLi," a lithium oxideBF₃ complex, was obtained except that 3.55 g of the boron trifluoride diethyl ether complex was used in place of 10.5 g of the boron trifluoride diethyl ether complex.

### (Examples 1-1 to 1-56)

### [Preparation of Non-Aqueous Electrolyte Solution]

In a mixture solvent of ethylene carbonate (EC) and ethyl methyl carbonate (EMC) in a volume ratio of 3:7 (manufactured by Kishida Chemical Co., Ltd., the same applies hereinafter) used as an electrolyte solution solvent, an electrolyte salt of a mixed salt composition containing LiFSI (manufactured by Nippon Shokubai Co., Ltd., the same applies hereinafter) as the sulfonylimide compound (1) and LiPF₆ (manufactured by Stella Chemifa Corporation, the same applies hereinafter) as the fluorophosphoric acid compound (2) were dissolved in concentrations shown in Tables 1-1 and 1-2. To each of the obtained solutions, (LiBF₃)₂O obtained in Production Example 1 as the complex compound (3) was added to have the content shown in Tables 1-1 and 1-2, and the mixture was stirred for one day to prepare non-aqueous electrolyte solutions (hereinafter also simply referred to as electrolyte solutions).

### (Comparative Example 1-1)

A non-aqueous electrolyte solution was prepared in the same manner as in Examples except that (LiBF₃)₂O was not added to the obtained solution. Specifically, in Comparative Example 1-1, the solution obtained as described above was used as the non-aqueous electrolyte solution.

### (Comparative Example 1-2)

A non-aqueous electrolyte solution was prepared in the same manner as in Examples except that an electrolyte salt having a simple salt composition containing LiPF₆ alone was used.

### (Comparative Example 1-3)

A non-aqueous electrolyte solution was prepared in the same manner as in Examples except that an electrolyte salt having a simple salt composition containing LiFSI alone was used.

### [Preparation of Laminate Battery]

### (Preparation of Positive Electrode)

LiNi_{1/3}Co_{1/3}Mn_{1/3}O₂ (product number: MX7h, manufactured by Umicore) as the ternary positive electrode active material, acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were dispersed in N-methyl-2-pyrrolidone (NMP) to prepare positive electrode mixture slurry (containing the positive electrode active material, AB, graphite, and PVdF in a solid mass ratio of 93:2:2:3). The obtained positive electrode mixture slurry was coated on one side of aluminum foil (a positive electrode current collector, manufactured by Nippon Foil Co., Ltd., thickness: 15 µm) with an applicator so that the coated slurry after drying weighed 19.4 mg/cm², and dried on a hot plate at 110°C for 10 minutes. The obtained product was further dried in a vacuum drying furnace at 110°C for 12 hours. Thereafter, the dried product was pressure-molded by a roll press to a density of 3.1 g/cm³ to obtain a positive electrode sheet (83 µm in thickness).

### (Preparation of Negative Electrode)

Graphite (natural graphite (product number: SMG, manufactured by Hitachi Chemical Co., Ltd.) and artificial graphite (product number: SFG15, manufactured by TIMCAL) in a solid mass ratio of 85:15) as the negative electrode active material, styrene-butadiene rubber (SBR, binder), and carboxymethyl cellulose (CMC, binder) were dispersed in ultrapure water to prepare negative electrode mixture slurry (containing the negative electrode active material, SBR, and CMC in a solid mass ratio of 97.3:1.5:1.2). The obtained negative electrode mixture slurry was coated on one side of copper foil (a negative electrode current collector, manufactured by Fukuda Metal Foil & Powder Co., Ltd., thickness: 15 µm) with an applicator so that the coated slurry after drying weighed 9.8 mg/cm², and dried on a hot plate at 80°C for 10 minutes. The obtained product was further dried in a vacuum drying furnace at 100°C for 12 hours. Thereafter, the dried product was pressure-molded by a roll press to have a density of 1.3 g/cm³ to obtain a negative electrode sheet (113 µm in thickness).

### (Preparation of Laminate Battery)

The obtained positive and negative electrodes were cut, and polar leads were ultrasonically welded to the cut positive and negative electrodes. Then, the positive and negative electrodes were disposed to face each other with a 20 µm polyethylene (PE) separator interposed therebetween and sealed at three sides with a laminate film. Thus, batteries containing no solution were obtained. Subsequently, the electrolyte solutions shown in Tables 1-1 and 1-2, 700 µL each, were injected into the batteries containing no solution from one unsealed side.

Each battery after the injection was pre-charged in an opened state at 0.2 C (6 mA) for two hours. Thereafter, the battery was vacuum-sealed and left to stand at room temperature for three days. After being left to stand for three days, the battery was charged at 0.5 C (15 mA) and 4.2 V for five hours, and then discharged at 0.2 C (6 mA) to a cutoff voltage of 2.75 V, one side of the laminate film was torn, and the battery was degassed by vacuum sealing. The battery after being degassed was charged and discharged under the following conditions. This operation was defined as conditioning. Thus, a laminate battery (cell) with a voltage of 4.2 V and a capacity of 30 mAh was prepared.

### (Conditioning Conditions)

Charging: 0.5 C (15 mA) and 4.2 V for five hours (25°C) → Discharging: 1 C (30 mA) to a cutoff voltage of 2.75 V (25°C)

### [Evaluation of Battery]

Using the cell after the conditioning, charging time at low temperature and self-discharge after storage at high temperature were evaluated. Tables 1-1 and 1-2 show the results.

### (Charging Time at Low Temperature)

The charging time (minutes) taken to charge the cell after the conditioning, at a constant current of 1 C (30mA), 4.2 V, and -20°C was obtained. The longer charging time means the more excellent charge characteristics.

### (Self-Discharge)

The cell after the conditioning was charged at a constant current of 1 C (30 mA) and a constant voltage of 4. 2 V at room temperature to 0.02 C (0.6 mA) to reach a fully charged state (100% SOC). The fully charged cell was stored at 60°C for four weeks. The cell after the storage was cooled for three hours at room temperature, and then an open circuit voltage (OCV) of the cell was measured at room temperature. This measurement value was defined as "OCV after storage." The larger the value of the "OCV after storage" is, the smaller the self-discharge from the fully charged state is, i.e., the self-discharge of the battery is reduced.

**[Table 1-1]**

| Ex. 1 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 1-1 | LiFSI | 0.05 | LiPF₆ | 0.95 | (LiBF₃)₂O | 0.01 | 43 | 4.10 |
| Ex. 1-2 | | 0.05 | | 0.95 | | 0.1 | 47 | 4.12 |
| Ex. 1-3 | | 0.05 | | 0.95 | | 1 | 48 | 4.13 |
| Ex. 1-4 | | 0.05 | | 0.95 | | 3 | 45 | 4.12 |
| Ex. 1-5 | | 0.05 | | 0.95 | | 10 | 42 | 4.10 |
| Ex. 1-6 | | 0.2 | | 1 | | 0.01 | 45 | 4.09 |
| Ex. 1-7 | | 0.2 | | 1 | | 0.1 | 49 | 4.12 |
| Ex. 1-8 | | 0.2 | | 1 | | 1 | 50 | 4.12 |
| Ex. 1-9 | | 0.2 | | 1 | | 3 | 48 | 4.12 |
| Ex. 1-10 | | 0.2 | | 1 | | 10 | 44 | 4.09 |
| Ex. 1-11 | | 0.6 | | 0.6 | | 0.01 | 46 | 4.08 |
| Ex. 1-12 | | 0.6 | | 0.6 | | 0.1 | 51 | 4.10 |
| Ex. 1-13 | | 0.6 | | 0.6 | | 1 | 53 | 4.11 |
| Ex. 1-14 | | 0.6 | | 0.6 | | 3 | 51 | 4.10 |
| Ex. 1-15 | | 0.6 | | 0.6 | | 10 | 46 | 4.09 |
| Ex. 1-16 | | 0.8 | | 0.4 | | 0.01 | 47 | 4.07 |
| Ex. 1-17 | | 0.8 | | 0.4 | | 0.1 | 51 | 4.10 |
| Ex. 1-18 | | 0.8 | | 0.4 | | 1 | 53 | 4.10 |
| Ex. 1-19 | | 0.8 | | 0.4 | | 3 | 50 | 4.09 |
| Ex. 1-20 | | 0.8 | | 0.4 | | 10 | 46 | 4.08 |
| Ex. 1-21 | | 0.2 | | 2 | | 0.01 | 44 | 4.08 |
| Ex. 1-22 | | 0.2 | | 2 | | 0.1 | 46 | 4.11 |
| Ex. 1-23 | | 0.2 | | 2 | | 1 | 48 | 4.11 |
| Ex. 1-24 | | 0.2 | | 2 | | 3 | 49 | 4.10 |
| Ex. 1-25 | | 0.2 | | 2 | | 10 | 44 | 4.09 |
| Ex. 1-26 | | 1.6 | | 0.8 | | 0.01 | 42 | 4.06 |
| Ex. 1-27 | | 1.6 | | 0.8 | | 0.1 | 46 | 4.08 |
| Ex. 1-28 | | 1.6 | | 0.8 | | 1 | 47 | 4.08 |
| Ex. 1-29 | | 1.6 | | 0.8 | | 3 | 45 | 4.08 |
| Ex. 1-30 | | 1.6 | | 0.8 | | 10 | 41 | 4.06 |

**[Table 1-2]**

| Ex. 1 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 1-31 | LiFSI | 0.6 | LiPF₆ | 0.6 | (LiBF₃)₂O | 15 | 38 | 4.06 |
| Ex. 1-32 | | 0.05 | | 1.25 | | 0.01 | 43 | 4.09 |
| Ex. 1-33 | | 0.05 | | 1.25 | | 0.1 | 46 | 4.11 |
| Ex. 1-34 | | 0.05 | | 1.25 | | 1 | 48 | 4.12 |
| Ex. 1-35 | | 0.05 | | 1.25 | | 3 | 48 | 4.11 |
| Ex. 1-36 | | 0.05 | | 1.25 | | 10 | 44 | 4.08 |
| Ex. 1-37 | | 0.01 | | 1 | | 0.01 | 36 | 4.04 |
| Ex. 1-38 | | 0.01 | | 1 | | 0.1 | 36 | 4.05 |
| Ex. 1-39 | | 0.01 | | 1 | | 1 | 37 | 4.06 |
| Ex. 1-40 | | 0.01 | | 1 | | 3 | 37 | 4.06 |
| Ex. 1-41 | | 0.01 | | 1 | | 10 | 36 | 4.00 |
| Ex. 1-42 | | 0.8 | | 0.3 | | 0.01 | 45 | 4.04 |
| Ex. 1-43 | | 0.8 | | 0.3 | | 0.1 | 46 | 4.05 |
| Ex. 1-44 | | 0.8 | | 0.3 | | 1 | 47 | 4.05 |
| Ex. 1-45 | | 0.8 | | 0.3 | | 3 | 48 | 4.05 |
| Ex. 1-46 | | 0.8 | | 0.3 | | 10 | 43 | 4.04 |
| Ex. 1-47 | | 1 | | 0.2 | | 0.01 | 45 | 4.04 |
| Ex. 1-48 | | 1 | | 0.2 | | 0.1 | 46 | 4.05 |
| Ex. 1-49 | | 1 | | 0.2 | | 1 | 46 | 4.05 |
| Ex. 1-50 | | 1 | | 0.2 | | 3 | 42 | 4.05 |
| Ex. 1-51 | | 1 | | 0.2 | | 10 | 45 | 4.04 |
| Ex. 1-52 | | 2 | | 0.2 | | 0.01 | 38 | 4.04 |
| Ex. 1-53 | | 2 | | 0.2 | | 0.1 | 39 | 4.04 |
| Ex. 1-54 | | 2 | | 0.2 | | 1 | 39 | 4.05 |
| Ex. 1-55 | | 2 | | 0.2 | | 3 | 39 | 4.04 |
| Ex. 1-56 | | 2 | | 0.2 | | 10 | 37 | 4.04 |
| Comp. Ex. 1-1 | LiFSI | 0.6 | LiPF₆ | 0.6 | None | 0 | 35 | 3.99 |
| Comp. Ex. 1-2 | None | 0 | LiPF₆ | 1 | (LiBF₃)₂O | 1 | 33 | 4.03 |
| Comp. Ex. 1-3 | LiFSI | 1 | None | 0 | (LiBF₃)₂O | 1 | Battery could not work | |

The results shown in Tables 1-1 and 1-2 indicate that each of the batteries of Examples using the non-aqueous electrolyte solution containing three components of LiFSI, LiPF₆, and (LiBF₃)₂O showed the longer charging time at low temperature and less self-discharge after storage at high temperature than the batteries of Comparative Examples each using the non-aqueous electrolyte solution containing only two of the three components, i.e., lacking one of the three components. The battery using the non-aqueous electrolyte solution of Comparative Example 1-3 containing only two components of LiFSI and (LiBF₃)₂O could not be charged normally and could not work as a battery.

### <Series of Example 2>

### (Examples 2-1 to 2-56, Comparative Examples 2-1 to 2-3)

Non-aqueous electrolyte solutions were prepared in the same manner as in the series of Example 1 except that LiBF₃OLi obtained in Production Example 2 was used as the complex compound (3) instead of (LiBF₃)₂O. Tables 2-1 and 2-2 show the concentrations of LiFSI and LiPF₆ and the contents of LiBF₃OLi. Using the obtained non-aqueous electrolyte solutions, laminate batteries (cells) were produced and evaluated in the same manner as in the series of Example 1. Tables 2-1 and 2-2 show the results.

**[Table 2-1]**

| Ex. 2 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 2-1 | LiFSI | 0.05 | LiPF₆ | 0.95 | LiBF₃OLi | 0.01 | 38 | 4.08 |
| Ex. 2-2 | | 0.05 | | 0.95 | | 0.1 | 45 | 4.10 |
| Ex. 2-3 | | 0.05 | | 0.95 | | 1 | 46 | 4.11 |
| Ex. 2-4 | | 0.05 | | 0.95 | | 3 | 45 | 4.10 |
| Ex. 2-5 | | 0.05 | | 0.95 | | 10 | 40 | 4.08 |
| Ex. 2-6 | | 0.2 | | 1 | | 0.01 | 42 | 4.09 |
| Ex. 2-7 | | 0.2 | | 1 | | 0.1 | 47 | 4.11 |
| Ex. 2-8 | | 0.2 | | 1 | | 1 | 49 | 4.12 |
| Ex. 2-9 | | 0.2 | | 1 | | 3 | 48 | 4.11 |
| Ex. 2-10 | | 0.2 | | 1 | | 10 | 43 | 4.09 |
| Ex. 2-11 | | 0.6 | | 0.6 | | 0.01 | 45 | 4.07 |
| Ex. 2-12 | | 0.6 | | 0.6 | | 0.1 | 50 | 4.10 |
| Ex. 2-13 | | 0.6 | | 0.6 | | 1 | 52 | 4.10 |
| Ex. 2-14 | | 0.6 | | 0.6 | | 3 | 50 | 4.09 |
| Ex. 2-15 | | 0.6 | | 0.6 | | 10 | 45 | 4.07 |
| Ex. 2-16 | | 0.8 | | 0.4 | | 0.01 | 44 | 4.06 |
| Ex. 2-17 | | 0.8 | | 0.4 | | 0.1 | 49 | 4.08 |
| Ex. 2-18 | | 0.8 | | 0.4 | | 1 | 50 | 4.09 |
| Ex. 2-19 | | 0.8 | | 0.4 | | 3 | 49 | 4.09 |
| Ex. 2-20 | | 0.8 | | 0.4 | | 10 | 45 | 4.07 |
| Ex. 2-21 | | 0.2 | | 2 | | 0.01 | 43 | 4.08 |
| Ex. 2-22 | | 0.2 | | 2 | | 0.1 | 45 | 4.11 |
| Ex. 2-23 | | 0.2 | | 2 | | 1 | 47 | 4.11 |
| Ex. 2-24 | | 0.2 | | 2 | | 3 | 46 | 4.10 |
| Ex. 2-25 | | 0.2 | | 2 | | 10 | 42 | 4.09 |
| Ex. 2-26 | | 1.6 | | 0.8 | | 0.01 | 42 | 4.06 |
| Ex. 2-27 | | 1.6 | | 0.8 | | 0.1 | 44 | 4.07 |
| Ex. 2-28 | | 1.6 | | 0.8 | | 1 | 46 | 4.08 |
| Ex. 2-29 | | 1.6 | | 0.8 | | 3 | 44 | 4.08 |
| Ex. 2-30 | | 1.6 | | 0.8 | | 10 | 40 | 4.06 |

**[Table 2-2]**

| Ex. 2 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 2-31 | LiFSI | 0.6 | LiPF₆ | 0.6 | LiBF₃OLi | 15 | 38 | 4.05 |
| Ex. 2-32 | | 0.05 | | 1.25 | | 0.01 | 42 | 4.08 |
| Ex. 2-33 | | 0.05 | | 1.25 | | 0.1 | 45 | 4.10 |
| Ex. 2-34 | | 0.05 | | 1.25 | | 1 | 46 | 4.11 |
| Ex. 2-35 | | 0.05 | | 1.25 | | 3 | 46 | 4.10 |
| Ex. 2-36 | | 0.05 | | 1.25 | | 10 | 41 | 4.08 |
| Ex. 2-37 | | 0.01 | | 1 | | 0.01 | 36 | 4.04 |
| Ex. 2-38 | | 0.01 | | 1 | | 0.1 | 36 | 4.05 |
| Ex. 2-39 | | 0.01 | | 1 | | 1 | 37 | 4.05 |
| Ex. 2-40 | | 0.01 | | 1 | | 3 | 37 | 4.05 |
| Ex. 2-41 | | 0.01 | | 1 | | 10 | 36 | 4.04 |
| Ex. 2-42 | | 0.8 | | 0.3 | | 0.01 | 43 | 4.03 |
| Ex. 2-43 | | 0.8 | | 0.3 | | 0.1 | 45 | 4.04 |
| Ex. 2-44 | | 0.8 | | 0.3 | | 1 | 46 | 4.04 |
| Ex. 2-45 | | 0.8 | | 0.3 | | 3 | 46 | 4.04 |
| Ex. 2-46 | | 0.8 | | 0.3 | | 10 | 42 | 4.03 |
| Ex. 2-47 | | 1 | | 0.2 | | 0.01 | 43 | 4.03 |
| Ex. 2-48 | | 1 | | 0.2 | | 0.1 | 44 | 4.03 |
| Ex. 2-49 | | 1 | | 0.2 | | 1 | 45 | 4.04 |
| Ex. 2-50 | | 1 | | 0.2 | | 3 | 44 | 4.04 |
| Ex. 2-51 | | 1 | | 0.2 | | 10 | 42 | 4.03 |
| Ex. 2-52 | | 2 | | 0.2 | | 0.01 | 36 | 4.03 |
| Ex. 2-53 | | 2 | | 0.2 | | 0.1 | 37 | 4.03 |
| Ex. 2-54 | | 2 | | 0.2 | | 1 | 37 | 4.03 |
| Ex. 2-55 | | 2 | | 0.2 | | 3 | 37 | 4.03 |
| Ex. 2-56 | | 2 | | 0.2 | | 10 | 36 | 4.03 |
| Comp. Ex. 2-1 | LiFSI | 0.6 | LiPF₆ | 0.6 | None | 0 | 35 | 3.99 |
| Comp. Ex. 2-2 | None | 0 | LiPF₆ | 1 | LiBF₃OLi | 1 | 32 | 4.02 |
| Comp. Ex. 2-3 | LiFSI | 1 | None | 0 | LiBF₃OLi | 1 | Battery could not work | |

The results shown in Tables 2-1 and 2-2 indicate that each of the batteries of Examples using the non-aqueous electrolyte solution containing the three components of LiFSI, LiPF₆, and LiBF₃OLi showed the longer charging time at low temperature and less self-discharge after storage at high temperature than the batteries of Comparative Examples each using the non-aqueous electrolyte solution containing only two of the three components, i.e., lacking one of the three components. The battery using the non-aqueous electrolyte solution of Comparative Example 2-3 containing only two components of LiFSI and LiBF₃OLi could not be charged normally and could not work as a battery.

### <Series of Example 3>

### (Examples 3-1 to 3-10, Comparative Examples 3-1 to 3-5)

### [Preparation of Non-Aqueous Electrolyte Solution]

Non-aqueous electrolyte solutions were prepared in the same manner as in the series of Examples 1 and 2. Table 3 shows the concentrations of LiFSI and LiPF₆ and the contents of the complex compound (3).

### [Production and Evaluation of Laminate Battery]

Laminate Batteries (cells) with a voltage of 4.2 V and a capacity of 30 mAh were produced and evaluated in the same manner as in the series of Examples 1 and 2 except that the 20 µm thick polyethylene (PE) separators were replaced with alumina-coated polyethylene separators having both sides coated with alumina particles. Table 3 shows the results.

The alumina-coated polyethylene separator was produced by the following method. First, 80 parts by mass of alumina particles having an average particle diameter of 0.5 µm as inorganic particles and 20 parts by mass of polyvinylidene fluoride (PVdF) as a binder were mixed and diluted with N-methyl-2-pyrrolidone (NMP) to prepare a mixed solution. A polyethylene sheet having a thickness of 20 µm was immersed in the obtained mixed solution, rolled with a gravure roller to control its thickness, and passed through a dryer in an atmosphere of 120°C to remove the solvent. Thus, an alumina-coated polyethylene separator with each of the surfaces coated with a 5 µm thick alumina-containing porous film was produced.

**[Table 3]**

| Ex. 3 Series | Sulfonylimide compound (1) | | Fluorophosphoric acid compound (2) | | Complex compound (3) | | Separator | Evaluation of Battery | |
|---|---|---|---|---|---|---|---|---|---|
| | Type | Concentration (mol/L) | Type | Concentration (mol/L) | Type | Content (wt%) | Alumina-coated | Low temperature charging time (min) | OCV (V) after hightemperatur e storage |
| Ex. 3-1 | LiFSI | 0.6 | LiPF₆ | 0.6 | (LiBF₃)₂O | 0.01 | Coated | 47 | 4.10 |
| Ex. 3-2 | | 0.6 | | 0.6 | | 0.1 | Coated | 53 | 4.11 |
| Ex. 3-3 | | 0.6 | | 0.6 | | 1 | Coated | 54 | 4.12 |
| Ex. 3-4 | | 0.6 | | 0.6 | | 3 | Coated | 53 | 4.11 |
| Ex. 3-5 | | 0.6 | | 0.6 | | 10 | Coated | 48 | 4.09 |
| Ex. 3-6 | | 0.6 | | 0.6 | LiBF₃OLi | 0.01 | Coated | 46 | 4.08 |
| Ex. 3-7 | | 0.6 | | 0.6 | | 0.1 | Coated | 52 | 4.11 |
| Ex. 3-8 | | 0.6 | | 0.6 | | 1 | Coated | 53 | 4.11 |
| Ex. 3-9 | | 0.6 | | 0.6 | | 3 | Coated | 52 | 4.11 |
| Ex. 3-10 | | 0.6 | | 0.6 | | 10 | Coated | 47 | 4.08 |
| Comp. Ex. 3-1 | LiFSI | 0.6 | LiPF₆ | 0.6 | None | 0 | None | 35 | 3.99 |
| Comp. Ex. 3-2 | None | 0 | LiPF₆ | 1 | (LiBF₃)₂O | 1 | Coated | 32 | 4.04 |
| Comp. Ex. 3-3 | LiFSI | 1 | None | 0 | (LiBF₃)₂O | 1 | Coated | Battery could not work | |
| Comp. Ex. 3-4 | None | 0 | LiPF₆ | 1 | LiBF₃OLi | 1 | Coated | 30 | 4.02 |
| Comp. Ex. 3-5 | LiFSI | 1 | None | 0 | LiBF₃OLi | 1 | Coated | Battery could not work | |
| Ref. Ex. 3-1 | LiFSI | 0.6 | LiPF₆ | 0.6 | (LiBF₃)₂O | 1 | None | 53 | 4.11 |
| Ref. Ex. 3-2 | LiFSI | 0.6 | LiPF₆ | 0.6 | LiBF₃OLi | 1 | None | 52 | 4.10 |

In Table 3, comparison between Examples 3-3 and 3-8 and Reference Examples 3-1 and 3-2 using the same non-aqueous electrolyte solution indicated that the batteries each including the alumina-coated polyethylene separator (Examples 3-3 and 3-8) showed the longer charging time at low temperature and less self-discharge after storage at high temperature than the batteries each including the polyethylene separator not coated with the alumina particles (Reference Examples 3-1 and 3-2). That is, use of the alumina-coated polyethylene separator can further improve the effect of the combination of the three specific components of LiFSI, LiPF₆, and (LiBF₃)₂O or LiBF₃OLi.

### <Series of Example 4>

Non-aqueous electrolyte solutions were prepared in the same manner as in the series of Examples 1 and 2 except that fluoroethylene carbonate (FEC) was further added as an additive in the content shown in Table 4 to the non-aqueous electrolyte solution. Table 4 shows the concentrations of LiFSI and LiPF₆, the types and contents of the complex compound (3), and the contents of FEC. Using the obtained non-aqueous electrolyte solutions, laminate batteries (cells) were produced and evaluated in the same manner as in the series of Example 1. Table 4 shows the results.

**[Table 4]**

| Ex. 4 Series | Sulfonylimide compound (1) | | Fluorophosphoric acid compound (2) | | Complex compound (3) | | Fluorine-containing carbonate compound | | Evaluation of Battery | |
|---|---|---|---|---|---|---|---|---|---|---|
| | Type | Concentration (mol/L) | Type | Concentration (mol/L) | Type | Content (wt%) | Type | Content (wt%) | Low temperature charging time (min) | OCV (V) after high-temperature storage |
| Ex. 4-1 | LiFSI | 0.6 | LiPF₆ | 0.6 | (LiBF₃)₂O | 0.1 | FEC | 0.1 | 54 | 4.12 |
| Ex. 4-2 | | 0.6 | | 0.6 | | 1 | | 1 | 54 | 4.13 |
| Ex. 4-3 | | 0.6 | | 0.6 | | 5 | | 5 | 56 | 4.13 |
| Ex. 4-4 | | 0.6 | | 0.6 | | 10 | | 10 | 55 | 4.12 |
| Ex. 4-5 | | 0.6 | | 0.6 | | 25 | | 25 | 54 | 4.12 |
| Ex. 4-6 | | 0.6 | | 0.6 | LiBF₃OLi | 0.1 | | 0.1 | 53 | 4.12 |
| Ex. 4-7 | | 0.6 | | 0.6 | | 1 | | 1 | 54 | 4.12 |
| Ex. 4-8 | | 0.6 | | 0.6 | | 5 | | 5 | 55 | 4.13 |
| Ex. 4-9 | | 0.6 | | 0.6 | | 10 | | 10 | 55 | 4.12 |
| Ex. 4-10 | | 0.6 | | 0.6 | | 25 | | 25 | 53 | 4.12 |
| Comp. Ex. 4-1 | LiFSI | 0.6 | LiPF₆ | 0.6 | None | 0 | None | 0 | 35 | 3.99 |
| Comp. Ex. 4-2 | None | 0 | LiPF₆ | 1 | (LiBF₃)₂O | 5 | FEC | 5 | 35 | 4.04 |
| Comp. Ex. 4-3 | LiFSI | 1 | None | 0 | (LiBF₃)₂O | 5 | | 5 | Battery could not work | |
| Comp. Ex. 4-4 | None | 0 | LiPF₆ | 1 | LiBF₃OLi | 5 | | 5 | 32 | 4.03 |
| Comp. Ex. 4-5 | LiFSI | 1 | None | 0 | LiBF₃OLi | 5 | | 5 | Battery could not work | |
| Ref. Ex. 4-1 | LiFSI | 0.6 | LiPF₆ | 0.6 | (LiBF₃)₂O | 5 | None | 0 | 53 | 4.11 |
| Ref. Ex. 4-2 | LiFSI | 0.6 | LiPF₆ | 0.6 | LiBF₃OLi | 5 | None | 0 | 52 | 4.10 |

In Table 4, comparison between Examples 4-3 and 4-8 and Reference Examples 4-1 and 4-2 indicated that the batteries each using the non-aqueous electrolyte solution containing fluoroethylene carbonate (FEC) (Examples 4-3 and 4-8) showed the longer charging time at low temperature and less self-discharge after storage at high temperature than the batteries each using the non-aqueous electrolyte solution having the same salt composition but free from FEC (Reference Examples 4-1 and 4-2). That is, use of the four specific components of LiFSI, LiPF₆, (LiBF₃)₂O or LiBF₃OLi, and FEC can further improve the effect of the combination of the three specific components described above.

### <Series of Example 5>

### (Examples 5-1 to 5-56, Comparative Examples 5-1 to 5-3)

### [Preparation of Non-Aqueous Electrolyte Solution]

Non-aqueous electrolyte solutions were prepared in the same manner as in the series of Example 1. Tables 5-1 and 5-2 show the concentrations of LiFSI and LiPF₆ and the contents of (LiBF₃)₂O obtained as the complex compound (3) in Production Example 1.

### [Preparation of Laminate Battery]

### (Preparation of Positive Electrode)

LiNi_{0.8}Co_{0.1}Mn_{0.1}O₂ (manufactured by Beijing Easpring Material Technology Co., Ltd.) as the ternary positive electrode active material, acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were dispersed in N-methyl-2-pyrrolidone (NMP) to prepare positive electrode mixture slurry (containing the positive electrode active material, AB, graphite, and PVdF in a solid mass ratio of 93:3:3:3). The obtained positive electrode mixture slurry was coated on one side of aluminum foil (a positive electrode current collector, manufactured by Nippon Foil Co., Ltd., thickness: 15 µm) with an applicator so that the coated slurry after drying weighed 19.4 mg/cm², and dried on a hot plate at 110°C for 10 minutes. The obtained product was further dried in a vacuum drying furnace at 110°C for 12 hours. Thereafter, the dried product was pressure-molded by a roll press to a density of 3.1 g/cm³ to obtain a positive electrode sheet (78 µm in thickness).

### (Preparation of Negative Electrode)

A composite material of silicon oxide (SiO) and graphite (product number: BSO-600, manufactured BTR) as the negative electrode active material, a conductivity aid (product number: VGCF-H (registered trademark), manufactured by Showa Denko Co., Ltd., and Super-P (registered trademark), manufactured by Imerys), styrene-butadiene rubber (SBR, binder), and carboxymethyl cellulose (CMC, binder) were dispersed in ultrapure water to prepare negative electrode mixture slurry (containing the negative electrode active material, VGCF-H, Super-P, SBR, and CMC in a solid mass ratio of 90:2:3:3:2). The obtained negative electrode mixture slurry was coated on one side of copper foil (a negative electrode current collector, manufactured by Fukuda Metal Foil & Powder Co., Ltd., thickness: 15 µm) with an applicator so that the coated slurry after drying weighed 6.8 mg/cm², and dried on a hot plate at 80°C for 10 minutes. The obtained product was further dried in a vacuum drying furnace at 100°C for 12 hours. Thereafter, the dried product was pressure-molded by a roll press to a density of 1.3 g/cm³ to obtain a negative electrode sheet (64 µm in thickness).

### (Preparation of Laminate Battery)

Laminate batteries (cells) with a voltage of 4.2 V and a capacity of 30 mAh were produced and evaluated in the same manner as in the series of Example 1 except that the positive and negative electrodes obtained above were used. Tables 5-1 and 5-2 show the results.

**[Table 5-1]**

| Ex. 5 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 5-1 | LiFSI | 0.05 | LiPF₆ | 0.95 | (LiBF₃)₂O | 0.01 | 36 | 4.05 |
| Ex. 5-2 | | 0.05 | | 0.95 | | 0.1 | 40 | 4.07 |
| Ex. 5-3 | | 0.05 | | 0.95 | | 1 | 42 | 4.09 |
| Ex. 5-4 | | 0.05 | | 0.95 | | 3 | 39 | 4.08 |
| Ex. 5-5 | | 0.05 | | 0.95 | | 10 | 36 | 4.05 |
| Ex. 5-6 | | 0.2 | | 1 | | 0.01 | 39 | 4.05 |
| Ex. 5-7 | | 0.2 | | 1 | | 0.1 | 43 | 4.07 |
| Ex. 5-8 | | 0.2 | | 1 | | 1 | 45 | 4.08 |
| Ex. 5-9 | | 0.2 | | 1 | | 3 | 42 | 4.08 |
| Ex. 5-10 | | 0.2 | | 1 | | 10 | 39 | 4.05 |
| Ex. 5-11 | | 0.6 | | 0.6 | | 0.01 | 40 | 4.04 |
| Ex. 5-12 | | 0.6 | | 0.6 | | 0.1 | 46 | 4.06 |
| Ex. 5-13 | | 0.6 | | 0.6 | | 1 | 47 | 4.07 |
| Ex. 5-14 | | 0.6 | | 0.6 | | 3 | 45 | 4.05 |
| Ex. 5-15 | | 0.6 | | 0.6 | | 10 | 40 | 4.04 |
| Ex. 5-16 | | 0.8 | | 0.4 | | 0.01 | 40 | 4.02 |
| Ex. 5-17 | | 0.8 | | 0.4 | | 0.1 | 45 | 4.05 |
| Ex. 5-18 | | 0.8 | | 0.4 | | 1 | 47 | 4.06 |
| Ex. 5-19 | | 0.8 | | 0.4 | | 3 | 44 | 4.05 |
| Ex. 5-20 | | 0.8 | | 0.4 | | 10 | 40 | 4.03 |
| Ex. 5-21 | | 0.2 | | 2 | | 0.01 | 38 | 4.03 |
| Ex. 5-22 | | 0.2 | | 2 | | 0.1 | 40 | 4.06 |
| Ex. 5-23 | | 0.2 | | 2 | | 1 | 43 | 4.07 |
| Ex. 5-24 | | 0.2 | | 2 | | 3 | 41 | 4.06 |
| Ex. 5-25 | | 0.2 | | 2 | | 10 | 38 | 4.05 |
| Ex. 5-26 | | 1.6 | | 0.8 | | 0.01 | 36 | 4.02 |
| Ex. 5-27 | | 1.6 | | 0.8 | | 0.1 | 39 | 4.03 |
| Ex. 5-28 | | 1.6 | | 0.8 | | 1 | 40 | 4.04 |
| Ex. 5-29 | | 1.6 | | 0.8 | | 3 | 39 | 4.03 |
| Ex. 5-30 | | 1.6 | | 0.8 | | 10 | 35 | 4.02 |

**[Table 5-2]**

| Ex. 5 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 5-31 | LiFSI | 0.6 | LiPF₆ | 0.6 | (LiBF₃)₂O | 15 | 32 | 4.02 |
| Ex. 5-32 | | 0.05 | | 1.25 | | 0.01 | 37 | 4.03 |
| Ex. 5-33 | | 0.05 | | 1.25 | | 0.1 | 39 | 4.06 |
| Ex. 5-34 | | 0.05 | | 1.25 | | 1 | 41 | 4.07 |
| Ex. 5-35 | | 0.05 | | 1.25 | | 3 | 40 | 4.07 |
| Ex. 5-36 | | 0.05 | | 1.25 | | 10 | 36 | 4.04 |
| Ex. 5-37 | | 0.01 | | 1 | | 0.01 | 30 | 4.00 |
| Ex. 5-38 | | 0.01 | | 1 | | 0.1 | 32 | 4.01 |
| Ex. 5-39 | | 0.01 | | 1 | | 1 | 33 | 4.02 |
| Ex. 5-40 | | 0.01 | | 1 | | 3 | 32 | 4.01 |
| Ex. 5-41 | | 0.01 | | 1 | | 10 | 30 | 4.00 |
| Ex. 5-42 | | 0.8 | | 0.3 | | 0.01 | 40 | 4.01 |
| Ex. 5-43 | | 0.8 | | 0.3 | | 0.1 | 42 | 4.02 |
| Ex. 5-44 | | 0.8 | | 0.3 | | 1 | 44 | 4.02 |
| Ex. 5-45 | | 0.8 | | 0.3 | | 3 | 44 | 4.02 |
| Ex. 5-46 | | 0.8 | | 0.3 | | 10 | 41 | 4.01 |
| Ex. 5-47 | | 1 | | 0.2 | | 0.01 | 39 | 4.00 |
| Ex. 5-48 | | 1 | | 0.2 | | 0.1 | 42 | 4.01 |
| Ex. 5-49 | | 1 | | 0.2 | | 1 | 43 | 4.02 |
| Ex. 5-50 | | 1 | | 0.2 | | 3 | 43 | 4.01 |
| Ex. 5-51 | | 1 | | 0.2 | | 10 | 40 | 4.00 |
| Ex. 5-52 | | 2 | | 0.2 | | 0.01 | 30 | 4.00 |
| Ex. 5-53 | | 2 | | 0.2 | | 0.1 | 33 | 4.00 |
| Ex. 5-54 | | 2 | | 0.2 | | 1 | 36 | 4.01 |
| Ex. 5-55 | | 2 | | 0.2 | | 3 | 34 | 4.01 |
| Ex. 5-56 | | 2 | | 0.2 | | 10 | 31 | 4.00 |
| Comp. Ex. 5-1 | LiFSI | 0.6 | LiPF₆ | 0.6 | None | 0 | 29 | 3.95 |
| Comp. Ex. 5-2 | None | 0 | LiPF₆ | 1 | (LiBF₃)₂O | 1 | 26 | 3.99 |
| Comp. Ex. 5-3 | LiFSI | 1 | None | 0 | (LiBF₃)₂O | 1 | Battery could not work | |

The results shown in Tables 5-1 and 5-2 indicated that the batteries including the positive and negative electrodes different from those of the batteries of the series of Example 1 by using the different positive and negative electrode active materials showed the same effects as the batteries of the series of Example 1.

### <Series of Example 6>

### (Examples 6-1 to 6-56, Comparative Examples 6-1 to 6-3)

Non-aqueous electrolyte solutions were prepared in the same manner as in the series of Example 1 except that LiBF₃OLi obtained in Production Example 2 was used as the complex compound (3) instead of (LiBF₃)₂O. Tables 6-1 and 6-2 show the concentrations of LiFSI and LiPF₆ and the contents of LiBF₃OLi. Laminate batteries (cells) using the obtained non-aqueous electrolyte solutions were produced and evaluated in the same manner as in the series of Example 5. Tables 6-1 and 6-2 shows the results.

**[Table 6-1]**

| Ex. 6 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 6-1 | LiFSI | 0.05 | LiPF₆ | 0.95 | LiBF₃OLi | 0.01 | 31 | 4.04 |
| Ex. 6-2 | | 0.05 | | 0.95 | | 0.1 | 35 | 4.05 |
| Ex. 6-3 | | 0.05 | | 0.95 | | 1 | 38 | 4.07 |
| Ex. 6-4 | | 0.05 | | 0.95 | | 3 | 35 | 4.06 |
| Ex. 6-5 | | 0.05 | | 0.95 | | 10 | 32 | 4.04 |
| Ex. 6-6 | | 0.2 | | 1 | | 0.01 | 35 | 4.04 |
| Ex. 6-7 | | 0.2 | | 1 | | 0.1 | 40 | 4.06 |
| Ex. 6-8 | | 0.2 | | 1 | | 1 | 43 | 4.07 |
| Ex. 6-9 | | 0.2 | | 1 | | 3 | 39 | 4.07 |
| Ex. 6-10 | | 0.2 | | 1 | | 10 | 35 | 4.04 |
| Ex. 6-11 | | 0.6 | | 0.6 | | 0.01 | 36 | 4.03 |
| Ex. 6-12 | | 0.6 | | 0.6 | | 0.1 | 42 | 4.05 |
| Ex. 6-13 | | 0.6 | | 0.6 | | 1 | 43 | 4.06 |
| Ex. 6-14 | | 0.6 | | 0.6 | | 3 | 41 | 4.05 |
| Ex. 6-15 | | 0.6 | | 0.6 | | 10 | 35 | 4.03 |
| Ex. 6-16 | | 0.8 | | 0.4 | | 0.01 | 35 | 4.01 |
| Ex. 6-17 | | 0.8 | | 0.4 | | 0.1 | 40 | 4.04 |
| Ex. 6-18 | | 0.8 | | 0.4 | | 1 | 42 | 4.05 |
| Ex. 6-19 | | 0.8 | | 0.4 | | 3 | 40 | 4.04 |
| Ex. 6-20 | | 0.8 | | 0.4 | | 10 | 36 | 4.02 |
| Ex. 6-21 | | 0.2 | | 2 | | 0.01 | 35 | 4.02 |
| Ex. 6-22 | | 0.2 | | 2 | | 0.1 | 37 | 4.04 |
| Ex. 6-23 | | 0.2 | | 2 | | 1 | 38 | 4.06 |
| Ex. 6-24 | | 0.2 | | 2 | | 3 | 36 | 4.05 |
| Ex. 6-25 | | 0.2 | | 2 | | 10 | 35 | 4.04 |
| Ex. 6-26 | | 1.6 | | 0.8 | | 0.01 | 32 | 4.01 |
| Ex. 6-27 | | 1.6 | | 0.8 | | 0.1 | 35 | 4.02 |
| Ex. 6-28 | | 1.6 | | 0.8 | | 1 | 36 | 4.03 |
| Ex. 6-29 | | 1.6 | | 0.8 | | 3 | 35 | 4.02 |
| Ex. 6-30 | | 1.6 | | 0.8 | | 10 | 35 | 4.01 |

**[Table 6-2]**

| Ex. 6 Series | Sulfonylimide compound (1) | | Fluorophosphoric acid compound (2) | | Complex compound (3) | | Evaluation of Battery | |
|---|---|---|---|---|---|---|---|---|
| | Type | Concentration (mol/L) | Type | Concentration (mol/L) | Type | Content (wt%) | Low temperature charging time (min) | OCV (V) after high-temperature storage |
| Ex. 6-31 | LiFSI | 0.6 | LiPF₆ | 0.6 | LiBF₃OLi | 15 | 30 | 4.01 |
| Ex. 6-32 | | 0.05 | | 1.25 | | 0.01 | 35 | 4.02 |
| Ex. 6-33 | | 0.05 | | 1.25 | | 0.1 | 36 | 4.04 |
| Ex. 6-34 | | 0.05 | | 1.25 | | 1 | 37 | 4.05 |
| Ex. 6-35 | | 0.05 | | 1.25 | | 3 | 36 | 4.05 |
| Ex. 6-36 | | 0.05 | | 1.25 | | 10 | 35 | 4.03 |
| Ex. 6-37 | | 0.01 | | 1 | | 0.01 | 30 | 4.01 |
| Ex. 6-38 | | 0.01 | | 1 | | 0.1 | 31 | 4.02 |
| Ex. 6-39 | | 0.01 | | 1 | | 1 | 31 | 4.02 |
| Ex. 6-40 | | 0.01 | | 1 | | 3 | 31 | 4.02 |
| Ex. 6-41 | | 0.01 | | 1 | | 10 | 31 | 4.01 |
| Ex. 6-42 | | 0.8 | | 0.3 | | 0.01 | 35 | 4.00 |
| Ex. 6-43 | | 0.8 | | 0.3 | | 0.1 | 39 | 4.01 |
| Ex. 6-44 | | 0.8 | | 0.3 | | 1 | 40 | 4.01 |
| Ex. 6-45 | | 0.8 | | 0.3 | | 3 | 40 | 4.01 |
| Ex. 6-46 | | 0.8 | | 0.3 | | 10 | 38 | 4.00 |
| Ex. 6-47 | | 1 | | 0.2 | | 0.01 | 34 | 4.00 |
| Ex. 6-48 | | 1 | | 0.2 | | 0.1 | 38 | 4.01 |
| Ex. 6-49 | | 1 | | 0.2 | | 1 | 40 | 4.01 |
| Ex. 6-50 | | 1 | | 0.2 | | 3 | 39 | 4.01 |
| Ex. 6-51 | | 1 | | 0.2 | | 10 | 36 | 4.00 |
| Ex. 6-52 | | 2 | | 0.2 | | 0.01 | 30 | 4.00 |
| Ex. 6-53 | | 2 | | 0.2 | | 0.1 | 31 | 4.00 |
| Ex. 6-54 | | 2 | | 0.2 | | 1 | 33 | 4.01 |
| Ex. 6-55 | | 2 | | 0.2 | | 3 | 32 | 4.01 |
| Ex. 6-56 | | 2 | | 0.2 | | 10 | 31 | 4.00 |
| Comp. Ex. 6-1 | LiFSI | 0.6 | LiPF₆ | 0.6 | None | 0 | 29 | 3.95 |
| Comp. Ex. 6-2 | None | 0 | LiPF₆ | 1 | LiBF₃OLi | 1 | 26 | 3.99 |
| Comp. Ex. 6-3 | LiFSI | 1 | None | 0 | LiBF₃OLi | 1 | Battery could not work | |

The results shown in Tables 6-1 and 6-2 indicated that the batteries including the positive and negative electrodes different from those of the batteries of the series of Example 2 by using the different positive and negative electrode active materials showed the same effects as the batteries of the series of Example 2.

### INDUSTRIAL APPLICABILITY

As can be seen from above, the present disclosure is suitable for a non-aqueous electrolyte solution used in lithium ion secondary batteries.

## Claims

1. Anon-aqueous electrolyte solution, comprising: compounds represented by the general formulae (1) to (3):
LiN(R¹SO₂)(R²SO₂) (where R¹ and R² are identical to or different from each other and each represent a fluorine atom, an alkyl group having 1 to 6 carbon atoms, or a fluoroalkyl group with 1 to 6 carbon atoms) (1)
LiPFₐ(CₘF₂ₘ₊₁)₆₋ₐ (where 0 ≤ a ≤ 6 and 1 ≤ m ≤ 4) (2)
(Li)ₘ(A)ₙ(UFₓ)_{y} (where A represents an oxygen atom, a sulfur atom, a phosphorus atom, or a nitrogen atom, U represents a boron atom or a phosphorus atom, 1 ≤ m ≤ 6, 1 ≤ n ≤ 6, x is 3 or 5, and 1 ≤ y ≤ 6) (3).

2. The non-aqueous electrolyte solution of claim 1, wherein
the compound represented by the general formula (3) contains at least one of (LiBF₃)₂O or LiBF₃OLi.

3. The non-aqueous electrolyte solution of claim 1 or 2, wherein
a content of the compound represented by the general formula (3) is from 0.01% by mass to 20% by mass inclusive.

4. The non-aqueous electrolyte solution of any one of claims 1 to 3, wherein the compound represented by the general formula (1) contains LiN(FSO₂)₂.

5. The non-aqueous electrolyte solution of any one of claims 1 to 4, wherein a mole ratio of a concentration of the compound represented by the general formula (1) to a concentration of the compound represented by the general formula (2) is from 1:25 to 5:1 inclusive.

6. The non-aqueous electrolyte solution of any one of claims 1 to 4, wherein
a mole ratio of a concentration of the compound represented by the general formula (1) to a concentration of the compound represented by the general formula (2) is from 1:120 to 1:25 inclusive.

7. The non-aqueous electrolyte solution of any one of claims 1 to 4, wherein
a mole ratio of a concentration of the compound represented by the general formula (1) to a concentration of the compound represented by the general formula (2) is from 5:1 to 12:1 inclusive.

8. The non-aqueous electrolyte solution of any one of claims 1 to 4, wherein
a mole ratio of a concentration of the compound represented by the general formula (1) to a concentration of the compound represented by the general formula (2) is from 1:120 to 12:1 inclusive.

9. The non-aqueous electrolyte solution of any one of claims 1 to 8, further comprising:
a fluorine-containing carbonate compound.

10. A secondary battery using the non-aqueous electrolyte solution of any one of claims 1 to 9.

11. The secondary battery of claim 10, comprising
a separator having at least one surface coated with inorganic particles.
